(19) Europäisches Patentamt
European Patent Office
Office européen des brevets

(11) **EP 2 913 549 B1**

(12) **FASCICULE DE BREVET EUROPEEN**

(45) Date de publication et mention
de la délivrance du brevet:
**12.04.2017 Bulletin 2017/15**

(51) Int Cl.:
***F16B 17/00*** *(2006.01)*

(21) Numéro de dépôt: **15153734.7**

(22) Date de dépôt: **04.02.2015**

(54) **Assemblage d'un roulement sur un arbre creux et procédé de fabrication d'un arbre équipé d'un roulement et d'un organe de machine**

Rollenlagereinheit auf einer Hohlwelle, und Herstellungsverfahren einer solchen Welle, die mit einem Rollenlager und einem Maschinenorgan ausgestattet ist

Assembly of a rolling bearing on a hollow shaft and method for manufacturing a shaft provided with a bearing and a machine member

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.02.2014 FR 1450958**
**28.04.2014 FR 1453801**

(43) Date de publication de la demande:
**02.09.2015 Bulletin 2015/36**

(73) Titulaire: **NTN-SNR Roulements**
**74000 Annecy (FR)**

(72) Inventeurs:
• **Paquien, Marc**
**74290 Veyrier du lac (FR)**

• **Sorlut, Martial**
**74960 Cran Gevrier (FR)**
• **Teillou, Cyprien**
**74000 Annecy (FR)**

(74) Mandataire: **Alatis**
**Cabinet d'Avocats**
**22 rue Drouot**
**75009 Paris (FR)**

(56) Documents cités:
**EP-A1- 0 494 285   DE-A1- 3 323 640**
**FR-A1- 2 593 228   US-A- 6 129 456**

**Description**

**DOMAINE TECHNIQUE DE L'INVENTION**

L'invention a trait à un assemblage entre un roulement, un arbre creux et le cas échéant un organe de machine tel qu'une came une roue dentée ou un pignon, et notamment un assemblage constituant un arbre à cames, et à un procédé de fabrication d'un tel assemblage, incluant une déformation radiale de l'arbre.

**ETAT DE LA TECHNIQUE ANTERIEURE**

Suivant un procédé connu de fabrication d'un arbre à cames de moteur à combustion interne, exposé dans le document FR 2 593 228, on forme des cames et des bagues de palier lisse avec un évidement cylindrique présentant des cannelures, puis on emmanche les cames et bagues de palier sur un arbre creux cylindrique, avant d'insérer axialement dans l'arbre un outil présentant des protubérances disposées dans l'alignement des cannelures. L'insertion de l'outil provoque un refoulement de la matière du tube radialement vers l'extérieur dans les cannelures, et permet d'obtenir une fixation positive des bagues et cames sur le tube. Ce procédé de fabrication impose une indexation angulaire de l'outil par rapport aux cannelures. Il induit sur les cames et bagues de palier des contraintes importantes après déformation de l'arbre, qui se traduisent par des déformations des surfaces fonctionnelles des cames et des bagues. Ces déformations ne sont pas pénalisantes dans la mesure où les cames et les bagues de paliers lisses sont généralement rectifiées après la phase d'assemblage sur l'arbre. Mais elles deviennent un problème si l'on souhaite remplacer les paliers lisses par des roulements, dont la finition des chemins de roulement est faite antérieurement à l'assemblage sur l'arbre.

Le document US 6 129 456 montre un assemblage comportant un roulement et un arbre plein, où le roulement présente deux portées de part et d'autre du chemin de roulement, serrées sur l'arbre à l'aide de bagues de fixations latérales.

On connaît par ailleurs un procédé de fabrication d'un arbre à cames, divulgué dans le document US 4,875,270, et suivant lequel on insère un arbre creux préalablement refroidi à basse température dans un boîtier dans lequel sont positionnés des pièces creuses, telles que des bagues intérieures de roulement et des bagues de cames, préalablement chauffées, puis on réalise une expansion radiale des parois de l'arbre creux par tout moyen approprié, par exemple par un outil ou par mise sous pression de la cavité de l'arbre, avant de laisser l'équilibre des températures s'établir, ce qui a pour effet d'augmenter les contraintes à l'interface fretté entre l'arbre et les pièces. Suivant ce procédé, il est envisagé de prévoir des reliefs particuliers des parois intérieures des bagues de roulement pour garantir leur positionnement après la phase de déformation. En particulier, il est proposé de prévoir sur les bagues de roulement, une gorge tournée vers l'intérieur et vers l'arbre creux, et dans laquelle les parois de l'arbre creux viennent se loger lors de la phase d'expansion. Mais ce procédé ne garantit pas une grande précision de l'alignement des pièces par rapport à l'axe de l'arbre après expansion, et ne permet pas non plus de retravailler aisément les formes des pièces après l'assemblage. En particulier, il ne permet pas de corriger après l'assemblage des éventuels défauts d'alignement des différentes pièces sur l'arbre.

**EXPOSE DE L'INVENTION**

L'invention vise à remédier aux inconvénients de l'état de la technique et à proposer des moyens permettant dans de meilleures conditions le frettage d'un roulement complet sur un arbre creux par déformation radiale de l'arbre.

Pour ce faire est proposé, suivant un premier aspect de l'invention un assemblage comportant un arbre creux et un roulement définissant un axe de rotation, le roulement comportant:

- une bague extérieure ayant une hauteur E mesurée axialement et sur laquelle est formé un chemin de roulement tourné radialement vers l'intérieur,

- une bague intérieure réalisée d'une pièce, ayant une hauteur H mesurée axialement telle que E<H, et de préférence E<3H/4, et de préférence E<2H/3, et présentant une face annulaire extérieure tournée radialement vers l'extérieur et sur laquelle est formé un chemin de roulement, la bague intérieure présentant : une face annulaire intérieure tournée radialement vers l'intérieur, un évidement annulaire qui s'étend axialement de part et d'autre du chemin de roulement de la bague intérieure, et deux portées de frettage situées axialement de part et d'autre de l'évidement annulaire et frettées sur l'arbre creux, et

- des corps roulants interposés entre le chemin de roulement de la bague extérieure et le chemin de roulement de la bague intérieure.

Grâce à son évidement, la bague intérieure de ce roulement est particulièrement adaptée à un montage sur un arbre creux, par exemple un arbre à cames, par un procédé incluant une expansion radiale, notamment par déformation plastique, de l'arbre sur lequel a été au préalable enfilé la bague. L'évidement annulaire peut avoir une génératrice quelconque, notamment rectiligne ou en arc de cercle pour former un fond plan ou concave. Suite à l'expansion de l'arbre, les portées de frettage sont frettées sur l'arbre déformé, alors que la matière en expansion de l'arbre entre les portées de frettage, peut librement se loger dans l'évidement annulaire de la bague. Ainsi les contraintes engendrées dans le matériau de la bague intérieure par le frettage sont-elles confinées dans les régions de la bague intérieure situées à la hauteur des portées de frettage et ne se propagent pas jusqu'au chemin de roulement, car ce dernier est sans recouvrement axial avec les portées de frettage. La partie de la bague intérieure située radialement entre l'évidement annulaire et le chemin de roulement n'est pas sous contrainte et ne subit aucune déformation notable.

Par ailleurs, une partie au moins de la face extérieure de la bague intérieure est axialement en saillie par rapport à la bague extérieure, et peut dès lors servir de surface de référence, après montage du roulement sur un arbre ou plus généralement sur un organe tournant de machine, par exemple pour une étape de finition de cet organe de machine. Cette partie en saillie peut également servir d'appui pour un capot de protection des chemins de roulement et des corps roulants.

Suivant un mode de réalisation, les corps roulants ont un diamètre $\phi$, et la hauteur E de la bague extérieure mesurée axialement est de préférence proche de ce diamètre, de préférence telle que E < 3 $\phi$ /2, et de préférence E < 4 $\phi$ /3. Pour ces corps roulants constitués par des billes, la hauteur E sera par ailleurs supérieure au diamètre $\phi$, et de préférence supérieure à 5 $\phi$ /4, de manière que les billes ne soient pas en saillie axialement par rapport à la bague extérieure et soient convenablement protégées.

Suivant un mode de réalisation, les deux portées de frettage tournées radialement vers l'intérieur ont une même section transversale constante, de sorte que leurs conditions de frettage sont identiques.

Du fait de sa hauteur plus importante, la face extérieure de la bague intérieure présente au moins une première portée de référence tournée radialement vers l'extérieur et axialement en saillie par rapport à la bague extérieure. Cette première portée de référence peut notamment être mise à profit pour positionner la bague intérieure ou la serrer lors du frettage. Suivant un mode de réalisation, cette première portée de référence est cylindrique, et de préférence rectifiée, pour constituer un tourillon qui permet de guider la rotation de l'arbre pour des opérations de finitions par exemple de rectification de cames, sans solliciter, voire sans mettre en rotation les corps roulants du roulement.

De préférence, la face extérieure de la bague intérieure présente une deuxième portée de référence, cylindrique axialement en saillie par rapport à la bague extérieure, la deuxième portée de référence étant de préférence rectifiée, le chemin de roulement de la bague intérieure étant situé entre la première portée de référence et la deuxième portée de référence.

La bague intérieure est de préférence symétrique par rapport à un plan de symétrie perpendiculaire à l'axe de rotation.

Le chemin de roulement de la bague intérieure est de préférence radialement en retrait par rapport aux portées de référence.

Suivant un mode de réalisation, l'assemblage comporte en outre un capot annulaire de protection dans lequel est entièrement logée la bague extérieure, le capot annulaire de protection, de préférence en au moins deux parties, venant radialement en appui contre la face extérieure de la bague intérieure de roulement, axialement de part et d'autre du chemin de roulement de la bague intérieure de roulement. Si la bague intérieure est pourvue de gorges d'étanchéités comme décrit plus haut, le capot peut avantageusement venir s'insérer dans ces gorges.

L'assemblage ainsi défini avec son capot est dans un état intermédiaire du procédé de fabrication, qui précède la finition. Il se prête tout particulièrement à un procédé de montage qui comporte une étape préalable de montage d'un sous-ensemble constitué par le roulement et le capot sur un arbre creux, et notamment sur un arbre à cames creux, suivie d'une étape de finition qui implique des opérations salissantes, par exemple une rectification de cames dans le cas d'un arbre à cames. Le capot permet de réaliser cette étape de finition sans risque pour le roulement. De plus, une au moins des portées annulaires latérales tournées radialement vers l'extérieur peut servir de surface de référence, par exemple pour faire tourner l'arbre creux, dans cette étape de finition.

Suivant un mode de réalisation, la face extérieure de la bague intérieure comporte deux gorges annulaires d'étanchéité situées axialement de part et d'autre du chemin de roulement de la bague intérieure, et axialement de part et d'autre de la bague extérieure. Ces gorges sont séparées par une distance J mesurée dans la direction axiale telle que J est légèrement supérieure à E. On permet ainsi le montage étanche d'un capot annulaire de protection dans lequel est entièrement logée la bague extérieure, le capot annulaire de protection présentant de préférence une section en U et étant constitué de préférence en deux parties au moins, avec des branches latérales qui viennent s'insérer dans les gorges annulaires, le capot étant destiné à protéger le chemin de la bague intérieure, le chemin de la bague extérieure et les corps roulants contre les polluants, notamment lors d'une phase de finition d'un arbre à cames auquel le roulement a préalablement été associé. L'étanchéité ainsi réalisée est de préférence statique.

Les portées annulaires de référence formées sur la face extérieure de la bague intérieure ont de préférence une hauteur mesurée axialement assez importante, ce qui permet leur utilisation comme surface de référence lors de certaines étapes de finition d'un arbre à cames auquel la bague a préalablement été associée. Ainsi, suivant un mode de réalisation, la bague intérieure présente une hauteur H mesurée axialement, et le chemin de roulement présente une largeur L mesurée axialement, telle que L<H/2, et de préférence L<H/3.

Dans cette hypothèse, l'évidement annulaire présente une largeur D, mesurée axialement, telle que D>L, et de préférence D>3/2 L, et de préférence D>2L.

Pour garantir une sécurisation du positionnement axial de la bague intérieure sur l'arbre, il peut être avantageux de favoriser la constitution, lors de la déformation radiale de l'arbre, de surfaces de contact axial entre la bague et l'arbre. On peut prévoir à cet effet de former un épaulement, un congé ou un chanfrein entre chacune des portées de frettage et l'évidement annulaire.

De préférence, la bague présente deux faces annulaires planes d'extrémités, qui sont de préférence reliées chacune à une des portées de frettage par un chanfrein, dont l'angle est de préférence supérieur à 45°, et de préférence supérieur à 60°, ou par un arrondi.

Pour minimiser les contraintes internes dans la bague intérieure dans la région du chemin de roulement, et par conséquent les déformations du chemin de roulement, on fait de préférence en sorte que, dans une zone annulaire s'étendant axialement de part et d'autre d'un plan radial médian du chemin de roulement formé sur la bague intérieure, il n'y ait pas de contact entre l'évidement annulaire et l'arbre creux. De préférence, on fait en sorte que dans une portion d'espace délimitée par deux plans radiaux encadrant le chemin de roulement formé sur la bague intérieure, il n'y ait pas de contact entre l'évidement annulaire et l'arbre creux.

De préférence, l'assemblage comporte au moins un organe de machine, notamment une came, un pignon ou une roue dentée fretté sur l'arbre creux, et notamment plusieurs cames pour former un arbre à cames. En particulier, l'invention vise un tel assemblage dont l'organe de machine est une pièce non-finie et doit subir une opération d'usinage, de préférence une opération de finition, par exemple une opération de rectification, après son frettage sur l'arbre. Elle vise également l'assemblage obtenu après finition de la pièce constituant l'organe de machine.

Suivant un autre aspect de l'invention, celle-ci a trait à un procédé de fabrication d'un assemblage tel que précédemment décrit, suivant lequel on enfile sur un arbre creux non déformé au moins un organe de machine et au moins un roulement tel que décrit précédemment, puis on provoque une déformation plastique de l'arbre radialement vers l'extérieur de manière à solidariser le roulement et l'organe de machine avec l'arbre. La déformation de l'arbre peut être obtenue notamment par mise sous pression hydraulique de la cavité creuse de l'arbre, ou par insertion en force dans l'arbre d'un outil réalisant l'expansion recherchée.

Afin de limiter la déformation des portées annulaires de référence, on peut avantageusement prévoir de confiner ces surfaces au moyen d'un outil lors de la phase de gonflement de l'arbre.

Suite à la solidarisation de la bague intérieure du roulement avec l'arbre, on peut prévoir d'usiner, et notamment de rectifier l'organe de machine en faisant tourner l'arbre en rotation en guidant la rotation de l'arbre par contact glissant ou roulant entre un organe de guidage extérieur et au moins une portée annulaire de référence de la face extérieure de la bague intérieure de roulement. On dispose ainsi lors de cette étape d'usinage d'un référentiel spatial rigoureux constitué par l'axe de rotation défini par la portée de référence.

On peut également prévoir qu'au moment de la rectification de l'organe de machine, la bague extérieure du roulement soit protégée par un capot, comme décrit précédemment.

Ce procédé de fabrication est particulièrement adapté à la fabrication d'un arbre à cames, l'organe de machine évoqué précédemment étant dans ce cas constitué par une ou plusieurs cames, et l'opération d'usinage envisagée incluant notamment une rectification de la ou des cames.

**BREVE DESCRIPTION DES FIGURES**

D'autres caractéristiques et avantages de l'invention ressortiront à la lecture de la description qui suit, en référence aux figures annexées, qui illustrent :

- la figure 1, une vue en coupe axiale d'un roulement destiné à un assemblage selon un mode de réalisation de l'invention;

- la figure 2, une vue en coupe axiale d'un assemblage selon un mode de réalisation de l'invention, comportant un arbre à cames creux équipé du roulement de la figure 1;

- la figure 3, un détail dans la zone III de la figure 2;

- la figure 4, une vue en coupe axiale d'un sous-ensemble comportant le roulement de la figure 1 et un capot de protection;

- la figure 5, une vue en coupe axiale d'un roulement destiné à un assemblage selon un deuxième mode de réalisation de l'invention;

- la figure 6, une illustration schématique d'une étape de fabrication d'un assemblage selon l'invention.

Pour plus de clarté, les éléments identiques ou similaires sont repérés par des signes de référence identiques sur l'ensemble des figures.

**DESCRIPTION DÉTAILLÉE DE MODES DE REALISATION**

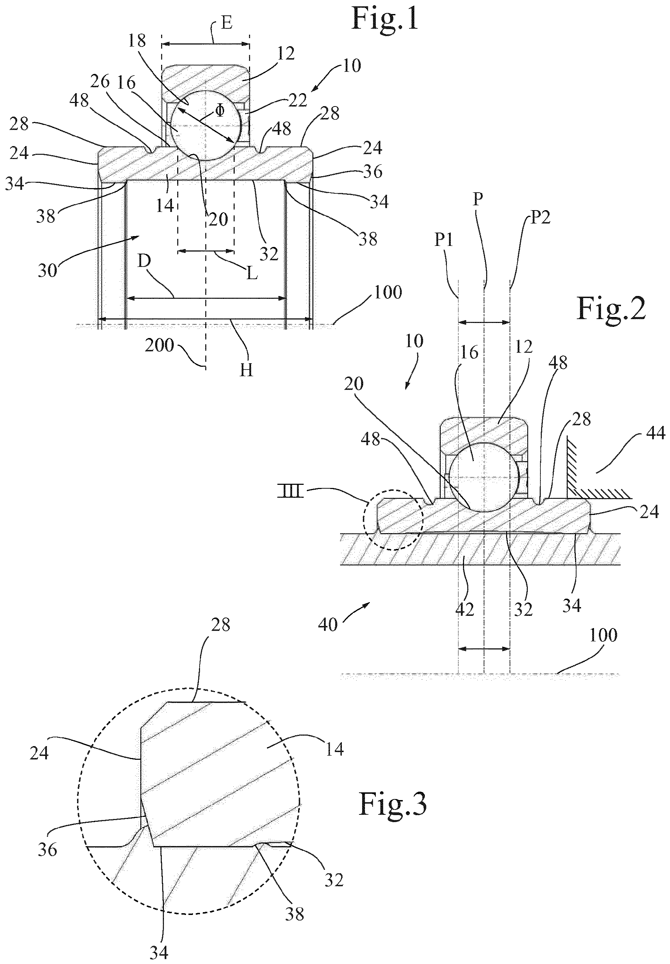

Sur la figure **1** est illustré un roulement **10** comportant une bague extérieure **12,** une bague intérieure **14,** et des corps roulants **16,** ici des billes, roulant sur des chemins de roulement **18, 20** formés sur la bague extérieure **12** et sur la bague intérieure **14.** Le roulement **10** peut également comporter une cage de retenue **22** des corps roulants **16,** et éventuellement des joints d'étanchéité (non représentés) s'étendant radialement entre les bagues, axialement de part et d'autre des chemins de roulement, pour protéger ceux-ci. Les chemins de roulement **18, 20** définissent un axe de rotation **100** du roulement **10,** qui, dans ce mode de réalisation, est également un axe de symétrie de révolution pour chacune des bagues **12, 14.** La bague intérieure **14,** dans ce mode de réalisation, présente de préférence un plan de symétrie transversal **200** perpendiculaire à l'axe de rotation **100** et passant par le chemin de roulement **20.**

De façon remarquable, la bague extérieure **12** a une hauteur E, mesurée axialement entre ses faces transversales plane d'extrémité, qui est nettement plus faible que la hauteur de la bague intérieure H, mesurée également axialement entre ses faces d'extrémité planes **24.** La hauteur E est supérieure au diamètre $\phi$ des corps roulant, et de préférence supérieure à 5 $\phi$ /4 mais inférieure à 3 $\phi$ /2, et dans le cas d'espèce inférieure à 4 $\phi$ /3.

La bague intérieure **14** présente ainsi une face extérieure **26** annulaire, tournée radialement vers l'extérieur, sur une partie centrale de laquelle est formé le chemin de roulement **20,** et qui présente également, axialement de part et d'autre du chemin de roulement **20,** deux portées cylindriques de référence **28** non recouvertes par la bague extérieure **12.**

La bague intérieure **14** présente en outre une face intérieure **30** annulaire, tournée radialement vers l'intérieur, qui comporte un évidement annulaire central **32** et, axialement de part et d'autre de celui-ci, deux portées annulaires de frettage **34** identiques, ici cylindriques, faisant saillie radialement vers l'axe **100** de révolution. L'évidement central **32** s'étend axialement de part et d'autre du chemin de roulement **20.** Des chanfreins **36** ou des congés assurent la transition entre les portées annulaires de frettage **34** et les faces planes d'extrémité **24.**

L'évidement central **32** dont le fond est profilé en arc de cercle de grand rayon, est de profondeur faible, mais de largeur D importante, en l'occurrence plus importante que la largeur L du chemin de roulement, de préférence supérieure à une fois et demi de la largeur L, et même supérieure au double de la largeur L. Deux épaulements congés ou chanfreins intérieurs **38** assurent la transition entre l'évidement central **32** et les portées de frettage **34.**

Comme illustré sur la figure **2,** Le roulement **10,** après assemblage, peut être monté sur un arbre creux **40,** par exemple un arbre à cames, sans risque de déformation du chemin de roulement **20.** On procède de la manière suivante. Dans un premier temps, on enfile le roulement **10** pré-assemblé sur l'arbre creux **40,** dont le diamètre extérieur est inférieur au diamètre intérieur de la bague intérieure **14** au niveau des portées de frettage **34.** Puis on déforme plastiquement l'arbre par tout moyen approprié, par exemple en appliquant une forte pression dans sa partie creuse ou en insérant un outil, de manière à provoquer une expansion radiale de la paroi **42** de l'arbre **40,** qui se trouve ainsi fretté par les portées de frettage **34.** La matière de l'arbre peut librement se loger au niveau de l'évidement **32,** entre les portées de frettage **34,** sans créer de contraintes au centre de la bague intérieure **14** et de préférence sans toucher le fond de l'évidement central **32.** Les contraintes dans la bague intérieure **14** sont donc localisées essentiellement aux extrémités axiales de la bague **14,** à distance du chemin de roulement **20.** Ceci est d'autant plus vrai que le rapport L/D est faible. Le cas échéant, la déformation radiale de l'arbre peut s'accompagner de la formation de petits bourrelets de matière qui viennent en appui contre les transitions **36, 38,** ce qui améliore encore la sécurisation du positionnement axial du roulement **10** sur l'arbre **40.** Pour minimiser les contraintes au niveau du chemin de roulement **20,** on prévoit de préférence une absence de contact entre la paroi **42** de l'arbre **40** et l'évidement **32** au moins au niveau d'un plan radial médian P du chemin de roulement, et de préférence dans une portion d'espace située entre deux plans radiaux P1 et P2 encadrant le chemin de roulement **20.**

Dans le cas d'un arbre à cames, les cames (non représentées) sont frettées sur l'arbre creux en même temps que le roulement **10.** Les portées de référence **28** de la bague intérieure **14** sont ensuite placées dans une lunette ou un sabot **44** de machine-outil, formant momentanément un dispositif de maintien ou de positionnement, tel un palier lisse qui permet de faire tourner l'arbre **40** autour de l'axe de rotation **100** du roulement **10,** ou un dispositif de maintien ou de positionnement tournant avec l'arbre autour de l'axe de rotation **100** pendant une opération de rectification des cames. On évite ainsi de solliciter trop fortement les corps roulants **16** et les chemins de roulement **18, 20** du roulement **10** durant la rectification. Pendant cette opération de rectification, on peut protéger les chemins de roulement **18, 20** et les corps roulants **16** à l'aide d'un capot annulaire **46** en U ou de toute autre forme appropriée venant recouvrir la bague extérieure **12** en prenant appui sur les portées de référence **28.**

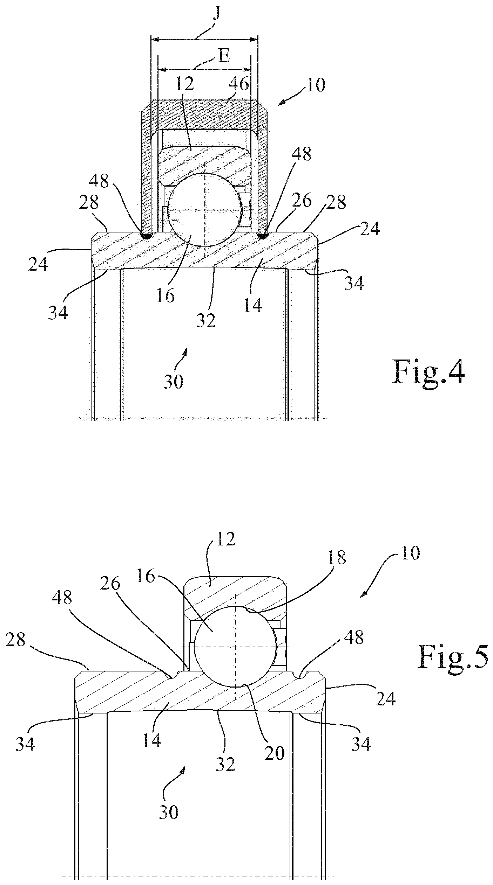

Sur la figure **4,** on a représenté le roulement **10** équipé d'un capot annulaire de protection présentant un profil en U et constitué en deux parties au moins, dont les extrémités des parois latérales viennent se loger dans deux gorges annulaires **48** formées sur la face extérieure **26** de la bague intérieure **14** et situées de part et d'autre du chemin de roulement **20** et axialement en saillie par rapport à la bague extérieure **12.** On garantit ainsi une parfaite étanchéité statique et donc une bonne protection durant le stockage, le transport, le montage et le cas échéant après le montage sur l'arbre creux **40** pour une étape de finition.

La figure **5** illustre une variante de réalisation dans laquelle la bague intérieure **14** n'a pas de plan de symétrie transversal, mais présente au contraire une portée de référence **28** de dimension importante d'un seul côté du chemin de roulement **20.** Pour un encombrement axial donné, cette disposition permet de maximiser la dimension axiale de la portée de référence **28.** Le cas échéant, les portées de frettage 34 peuvent avoir des dimensions différentes, et notamment un diamètre différent et/ou un dimension axiale différente.

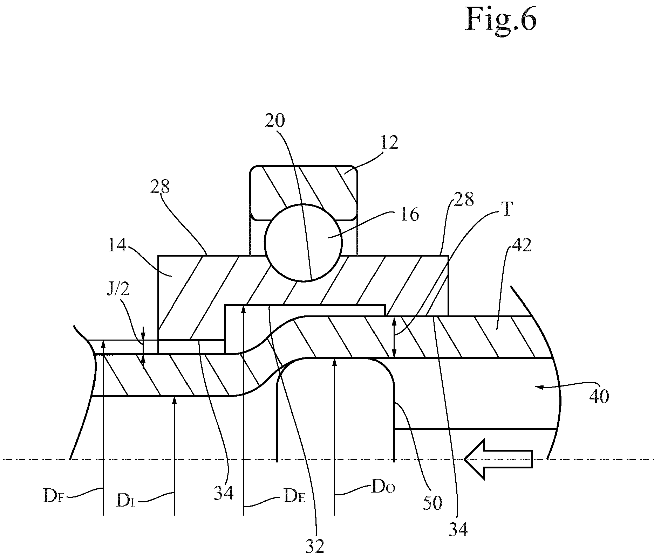

Sur la figure **6,** on a illustré de façon schématique une étape d'assemblage du roulement **10** sur un arbre creux **40.** On a notamment illustré ici l'insertion, de droite à gauche sur la figure, d'un outil **50** permettant une expansion radiale de l'arbre. Sur la figure, on a illustré de façon schématique l'outil **50** positionné entre les deux portées de frettage **34,** de telle sorte que la portée de frettage **34** à droite sur la figure est déjà frettée sur l'arbre, alors que celle de gauche ne l'est pas encore. Cette vue permet notamment d'illustrer le dimensionnement respectif des différents composants et de l'outil **50.** Ainsi, on désigne par

- $D_I$ le diamètre interne initial de l'arbre creux **40,**

- Do le plus grand diamètre de l'outil **50,** qui définit la cote finale de la paroi interne de l'arbre creux **40** après expansion,

- $D_F$ le diamètre des portées de frettage **34** avant assemblage,

- J le jeu entre l'arbre creux **40** et les portées de frettage **34** avant assemblage,

- $D_E$ le plus grand diamètre intérieur de l'évidement interne **32,**

- T l'épaisseur de la paroi **42** de l'arbre creux **40** à l'issue du frettage.

Naturellement, le diamètre Do est plus grand que le diamètre $D_I$. Pour faciliter l'assemblage, on prévoit en outre un jeu J positif entre l'arbre creux **40** et les portées de frettage avant expansion de l'arbre **40** (sur la gauche), ce qui se traduit par l'inégalité suivante:

$$J > 0$$

Le frettage se traduit quant à lui par une interférence entre l'arbre creux et les portées de frettage, d'où l'inégalité:

$$D_0 > D_I + J$$

Pour minimiser les contraintes et déformations au niveau du chemin de roulement **20,** on prévoit de manière préférentielle qu'il n'y ait pas contact entre l'arbre creux **40** et la paroi de l'évidement interne **32** au niveau de son plus grand diamètre intérieur, ce qui se traduit par l'inégalité

$$D_0 + 2T < D_E$$

Comme on l'a dit précédemment, cette absence de contact est de préférence réalisée non seulement au niveau du plan médian radial P du chemin de roulement **20,** mais également de part et d'autre entre les plans P1 et P2 illustrés sur la figure **2.** Naturellement, diverses variantes sont possibles. En particulier, il est possible de prévoir que l'arbre creux assemblé soit cannelé ou plus généralement non cylindrique, ce qui peut être obtenu soit en utilisant un outil 50 présentant des cannelures ou des formes non régulières pour déformer un arbre cylindrique, soit en utilisant un outil ayant une symétrie de révolution pour déformer un arbre initialement non cylindrique, soit en utilisant un outil présentant des cannelure pour déformer un arbre présentant déjà des cannelure.

Il est également possible de prévoir des gorges annulaire axiales dans les faces d'extrémité **24** de la bague intérieur, comme il est décrit dans la demande FR 14 50 958, dont le contenu est ici intégralement intégré par référence.

L'état de surface des portées de frettage **34** peut être lisse ou rugueux, par exemple avec des chanfreins axiaux ou des cannelures. Les portées de frettage **34** peuvent avoir une forme générale polygonale, de préférence à plus de vingt facettes.

## Revendications

1. Assemblage comportant un arbre (40) et au moins un roulement (10) définissant un axe de rotation (100) et comportant une bague extérieure (12) ayant une hauteur E mesurée axialement et sur laquelle est formé un chemin de roulement (18) tourné radialement vers l'intérieur, une bague intérieure (14) réalisée d'une pièce, ayant une hauteur H mesurée axialement, présentant une face annulaire extérieure (26) tournée radialement vers l'extérieur sur laquelle est formé un chemin de roulement (20), et des corps roulants (16) interposés entre le chemin de roulement (18) de la bague extérieure (12) et le chemin de roulement (20) de la bague intérieure (14), la bague intérieure (14) présentant une face annulaire intérieure (30) tournée radialement vers l'intérieur, présentant un évidement annulaire (32) s'étendant axialement de part et d'autre du chemin de roulement (20) de la bague intérieure (14) et la hauteur E de la bague extérieure (12) étant inférieure à la hauteur H de la bague intérieure, **caractérisé en ce que** l'arbre est creux et la bague intérieure présente de plus deux portées de frettage (34) situées axialement de part et d'autre de l'évidement annulaire (32) et frettées sur l'arbre creux.

2. Assemblage selon la revendication 1, **caractérisé en ce que** les corps roulant ont un diamètre de roulage φ, la hauteur E étant telle que E<3φ/2, et de préférence E<4φ/3.

**3.** Assemblage selon l'une quelconque des revendications précédentes, **caractérisé en ce que** la face extérieure (26) de la bague intérieure (14) comporte au moins une première portée de référence (28) cylindrique axialement en saillie par rapport à la bague extérieure (12), la première portée de référence (28) étant de préférence rectifiée.

**4.** Assemblage selon la revendication précédente, **caractérisé en ce que** la face extérieure (26) de la bague intérieure (14) présente une deuxième portée de référence (28) cylindrique axialement en saillie par rapport à la bague extérieure (12), la deuxième portée de référence (28) étant de préférence rectifiée, le chemin de roulement (20) de la bague intérieure (14) étant situé entre la première portée de référence (28) et la deuxième portée de référence (28).

**5.** Assemblage selon la revendication précédente, **caractérisé en ce que** la première portée de référence (28) et la deuxième portée de référence (28) ont des hauteurs mesurées axialement, qui sont différentes l'une de l'autre.

**6.** Assemblage selon l'une quelconque des revendications précédentes, **caractérisé en ce qu'**il comporte en outre un capot annulaire de protection (46) dans lequel est entièrement logée la bague extérieure (12), le capot annulaire de protection (46) venant radialement en appui contre la face extérieure (26) de la bague intérieure (14), axialement de part et d'autre du chemin de roulement (20) de la bague intérieure (14).

**7.** Assemblage selon l'une quelconque des revendications 1 à 5, **caractérisé en ce que** la face extérieure (26) de la bague intérieure (14) comporte deux gorges annulaires (48) d'étanchéité situées axialement de part et d'autre du chemin de roulement (20) de la bague intérieure (14), et axialement de part et d'autre de la bague extérieure (12).

**8.** Assemblage selon la revendication 7, **caractérisé en ce qu'**il comporte en outre un capot annulaire de protection (46) dans lequel est entièrement logée la bague extérieure (12), le capot annulaire de protection (46) présentant un profil en U, avec des branches venant se loger dans les deux gorges annulaires d'étanchéité (48), axialement de part et d'autre du chemin de roulement (20) de la bague intérieure (14).

**9.** Assemblage selon l'une quelconque des revendications précédentes, **caractérisé en ce que** le chemin de roulement (20) de la bague intérieure (14) présente une largeur L mesurée axialement, telle que L<H/2, et de préférence L<H/3.

**10.** Assemblage selon la revendication précédente, **caractérisé en ce que** l'évidement annulaire (32) présente une largeur D, mesurée axialement, telle que D>L, et de préférence D>3/2 L, et de préférence D>2L.

**11.** Assemblage selon l'une quelconque des revendications précédentes, **caractérisé en ce que** entre chacune des portées de frettage (34) et l'évidement annulaire (32) est formé un congé, un chanfrein ou un épaulement (38).

**12.** Assemblage selon l'une quelconque des revendications précédentes, **caractérisé en ce que** la bague intérieure (14) présente deux faces annulaires planes d'extrémités (24), chacune reliée à une des portées de frettage (34) par un chanfrein (36) présentant un angle supérieur 45°, de préférence supérieur à 60° ou un arrondi.

**13.** Assemblage selon l'une quelconque des revendications précédentes, **caractérisé en ce que** dans une zone annulaire s'étendant axialement de part et d'autre d'un plan radial médian (P) du chemin de roulement (20) formé sur la bague intérieure (14), il n'y a pas de contact entre l'évidement annulaire (32) et l'arbre creux (40).

**14.** Assemblage selon l'une quelconque des revendications précédentes, **caractérisé en ce que** dans une portion d'espace délimitée par deux plans radiaux (P1, P2) encadrant le chemin de roulement (20) formé sur la bague intérieure (14), il n'y a pas de contact entre l'évidement annulaire (32) et l'arbre creux (40).

**15.** Assemblage selon l'une quelconque des revendications précédentes, **caractérisé en ce qu'**il comporte en outre au moins un organe de machine, notamment une came, un pignon ou une roue dentée, fretté sur l'arbre creux.

**16.** Assemblage selon la revendication 15, **caractérisé en ce que** l'organe de machine est non fini.

**17.** Procédé de fabrication d'un assemblage selon la revendication 15 ou la revendication 16, **caractérisé en ce que** l'on enfile, sur un arbre creux (40) non déformé, au moins un organe de machine et au moins un roulement (10), le roulement (10) définissant un axe de rotation (100) et comportant une bague extérieure (12) ayant une hauteur E mesurée axialement et sur laquelle est formé un chemin de roulement (18) tourné radialement vers l'intérieur, une bague intérieure (14) réalisée d'une pièce, ayant une hauteur H mesurée axialement, présentant une face annulaire extérieure (26) tournée radialement vers l'extérieur sur laquelle est formé un chemin de roulement (20), et des corps roulants (16) interposés entre le chemin de roulement (18) de la bague extérieure (12) et le chemin de roulement (20) de la bague intérieure (14), la bague intérieure (14) présentant une face annulaire intérieure (30) tournée radialement vers l'intérieur, présentant un évidement annulaire (32) et deux portées de frettage (34) situées axialement de part et d'autre de l'évidement annulaire (32), l'évidement annulaire (32) s'étendant axialement de part et d'autre du chemin de roulement (20) de la bague intérieure (14) et la hauteur E de la bague extérieure (12) étant inférieure à la hauteur H de la bague intérieure (14), puis on provoque une déformation plastique de l'arbre (40) radialement vers l'extérieur de manière à solidariser la bague intérieure (14) du roulement (10) et l'organe de machine avec l'arbre (40).

18. Procédé de fabrication selon la revendication 17, **caractérisé en ce que** suite à la solidarisation de la bague intérieure (14) du roulement (10) avec l'arbre (40), on usine l'organe de machine en faisant tourner l'arbre en rotation, en guidant la rotation de l'arbre par contact glissant ou roulant entre un sabot ou une lunette de guidage (44) et au moins une portée de référence (28) de la face annulaire extérieure (26) de la bague intérieure (14) du roulement (10).

19. Procédé de fabrication selon la revendication 18, **caractérisé en ce que** l'usinage comporte une rectification de l'organe de machine.

20. Procédé de fabrication selon la revendication 18 ou la revendication 19, **caractérisé en ce que** durant l'usinage de l'organe de machine, le roulement (10) est associé à un capot (46) pour former un assemblage selon la revendication 6 ou la revendication 8.

21. Procédé de fabrication selon l'une quelconque des revendications 17 à 20, **caractérisé en ce que** l'organe de machine est une came.

**Patentansprüche**

1. Eine aus einer Welle (40) und mindestens einem Wälzlager (10) bestehende Anordnung, welche eine Drehachse (100) festlegt und einen Außenring (12) mit einer axial gemessenen Höhe E umfasst, auf welcher ein radial nach innen gerichteter Rollweg (18) geformt ist, wobei ein aus einem einzigen Stück geformter Innenring (14) mit einer axial gemessenen Höhe H eine radial nach außen gerichtete ringförmige Außenseite (26) aufweist, auf der ein Rollweg (20) geformt ist, und Rollkörper (16), die zwischen dem Rollweg (18) des Außenrings (12) und dem Rollweg (20) des Innenrings (14) angeordnet sind, wobei der Innenring (14) eine radial nach innen gerichtete innere Ringseite (30) mit einer ringförmigen Aussparung (32) aufweist, welche sich axial zu beiden Seiten des Rollwegs (20) des Innenrings (14) erstreckt, und die Höhe E des Außenrings (12) niedriger ist als die Höhe H des Innenrings, **dadurch gekennzeichnet, dass** die Welle hohl ist und der Innenring darüber hinaus axial zu beiden Seiten der ringförmigen Aussparung (32) zwei Schrumpfflächen (34) aufweist, die auf die Hohlwelle aufgeschrumpft sind.

2. Anordnung nach Anspruch 1, **dadurch gekennzeichnet, dass** die Rollkörper einen Rolldurchmesser $\Phi$ aufweisen, wobei die Höhe E so ist, dass $E < 3\Phi/2$ und vorzugsweise so ist, dass $E < 4\Phi/3$.

3. Anordnung nach einem der vorhergehenden Ansprüche, **dadurch gekennzeichnet, dass** die Außenseite (26) des Innenrings (14) mindestens eine erste zylindrische Bezugsfläche (28) aufweist, die in Bezug auf den Außenring (12) axial vorsteht, wobei die erste Bezugsfläche (28) vorzugsweise geschliffen ist.

4. Anordnung nach dem vorhergehenden Anspruch, **dadurch gekennzeichnet, dass** die Außenseite (26) des Innenrings (14) eine zweite zylindrische, in Bezug auf den Außenring (12) vorstehende Bezugsfläche (28) aufweist, wobei die zweite Bezugsfläche (28) vorzugsweise geschliffen ist, und sich der Rollweg (20) des Innenrings (14) zwischen der ersten Bezugsfläche (28) und der zweiten Bezugsfläche (28) befindet.

5. Anordnung nach dem vorhergehenden Anspruch, **dadurch gekennzeichnet, dass** die erste Bezugsfläche (28) und die zweite Bezugsfläche (28) unterschiedliche axial gemessene Höhen haben.

6. Anordnung nach einem der vorhergehenden Ansprüche, **dadurch gekennzeichnet, dass** sie des Weiteren eine ringförmige Schutzkappe (46) umfasst, in welcher der Außenring (12) eingebettet ist, wobei die ringförmige Schutzkappe (46) radial an der Außenseite (26) des Innenrings (14) und axial zu beiden Seiten des Rollwegs (20) des Innenrings (14) aufliegt.

7. Anordnung nach einem der Ansprüche 1 bis 5, **dadurch gekennzeichnet, dass** die Außenseite (26) des Innenrings (14) axial zu beiden Seiten des Rollwegs (20) des Innenrings und axial zu beiden Seiten des Außenrings (12) zwei ringförmige Dichtungsnute (48) aufweist.

8. Anordnung nach Anspruch 7, **dadurch gekennzeichnet, dass** sie des Weiteren eine ringförmige Schutzkappe (46) umfasst, in welcher der Außenring (12) eingebettet ist, wobei die ringförmige Schutzkappe (46) ein u-förmiges Profil aufweist mit Armen, die in den beiden ringförmigen Dichtungsnuten (48) axial zu beiden Seiten des Rollwegs (20) des Innenrings (14) liegen.

9. Anordnung nach einem der vorhergehenden Ansprüche, **dadurch gekennzeichnet, dass** der Rollweg (20) des Innenrings (14) eine axial gemessene Breite L aufweist, die so ist, dass L<H/2 und vorzugsweise so ist, dass L<H/3.

10. Anordnung nach dem vorhergehenden Anspruch, **dadurch gekennzeichnet, dass** die ringförmige Aussparung (32) eine axial gemessene Breite D aufweist, die so ist, dass D>L, vorzugsweise so ist, dass D> 3/2 L und vorzugsweise so ist, dass D>2L.

11. Anordnung nach einem der vorhergehenden Ansprüche, **dadurch gekennzeichnet, dass** zwischen jeder der Schrumpfflächen (34) und der ringförmigen Aussparung (32) eine Ausrundung, Abschrägung oder eine Schulter (38) gebildet wird.

12. Anordnung nach einem der vorhergehenden Ansprüche, **dadurch gekennzeichnet, dass** der Innenring (14) zwei ringförmige ebene Endflächen (24) aufweist, von denen jede über eine Abschrägung (36) in einem Winkel größer 45°, vorzugsweise größer 60°, oder über eine Rundung mit einer der Schrumpfflächen (34) verbunden ist.

13. Anordnung nach einem der vorhergehenden Ansprüche, **dadurch gekennzeichnet, dass** in einem ringförmigen Bereich, der sich axial zu beiden Seiten einer auf dem Innenring (14) gebildeten radialen Mittelebene (F) des Rollwegs (20) erstreckt, kein Kontakt zwischen der ringförmigen Aussparung (32) und der Hohlwelle (40) besteht.

14. Anordnung nach einem der vorhergehenden Ansprüche, **dadurch gekennzeichnet, dass** in einem Raumabschnitt, der abgegrenzt wird durch zwei radiale Ebenen (P1, P2), welche den auf dem Innenring (14) geformten Rollweg (20) einrahmen, kein Kontakt zwischen der ringförmigen Aussparung (32) und der hohlen Welle (40) besteht.

15. Anordnung nach einem der vorhergehenden Ansprüche, **dadurch gekennzeichnet, dass** sie des Weiteren mindestens ein Maschinenelement, insbesondere eine Nocke, ein Ritzel oder ein Zahnrad aufweist, das auf die Hohlwelle aufgeschrumpft ist.

16. Anordnung nach Anspruch 15, **dadurch gekennzeichnet, dass** das Maschinenelement nicht fertig bearbeitet ist.

17. Verfahren zur Herstellung einer Anordnung nach Anspruch 15 oder Anspruch 16, **dadurch gekenn-**

**zeichnet, dass** man auf eine nicht verformte Hohlwelle (40) mindestens ein Maschinenelement und mindesten ein Wälzlager (10) aufzieht, wobei das Wälzlager (10) eine Drehachse (100) bestimmt und einen Außenring (12) mit einer axial gemessenen Höhe E aufweist, auf dem ein radial nach innen gerichteter Rollweg (18) geformt ist, wobei ein aus einem einzigen Stück geformter Innenring (14) mit einer axial gemessenen Höhe eine radial nach außen gerichtete ringförmige Außenfläche (26) aufweist, auf welcher ein Rollweg (20) geformt ist, und Rollkörper (16), die zwischen dem Rollweg (18) des Außenrings (12) und dem Rollweg (20) des Innenrings (14) angeordnet sind, wobei der Innenring (14) eine radial nach innen gerichtete ringförmige Innenseite (30) mit einer ringförmigen Aussparung (32) und zwei axial zu beiden Seiten der ringförmigen Aussparung (32) befindlichen Schrumpfflächen (34) aufweist, wobei sich die ringförmige Aussparung (32) axial zu beiden Seiten des Rollwegs (20) des Innenrings (14) erstreckt und die Höhe E des Außenrings (12) kleiner ist als die Höhe H des Innenrings (14), und man anschließend eine plastische Verformung der Welle (40) radial nach außen herbei führt, so dass sich der Innenring (14) des Lagers (10) und das Maschinenelement mit der Welle (40) formschlüssig verbinden.

18. Herstellungsverfahren nach Anspruch 17, **dadurch gekennzeichnet, dass** man nach der formschlüssigen Verbindung des Innenrings (14) des Lagers (10) mit der Welle (40) das Maschinenelement durch Drehen der Welle bearbeitet, indem man die Drehung der Welle durch gleitenden oder rollenden Kontakt zwischen einem Gleitstück oder einem Führungsring (44) und mindestens einer Bezugsfläche (28) der ringförmigen Außenseite (26) des Innenrings (14) des Lagers (10) führt.

19. Herstellungsverfahren nach Anspruch 18, **dadurch gekennzeichnet, dass** die Bearbeitung das Schleifen des Maschinenelements umfasst.

20. Herstellungsverfahren nach Anspruch 18 oder Anspruch 19, **dadurch gekennzeichnet, dass** sich das Wälzlager (10) während der Bearbeitung des Maschinenelements mit einer Schutzkappe (46) zu einer Anordnung nach Anspruch 6 oder Anspruch 8 verbindet.

21. Herstellungsverfahren nach einem der Ansprüche 17 bis 20, **dadurch gekennzeichnet, dass** das Maschinenelement eine Nocke ist.

**Claims**

1. An assembly comprising a shaft (40) and at least one rolling bearing (10) defining an axis of rotation (100) and comprising an outer ring (12) having an axially measured height E and whereon a raceway (18) facing radially inwards is formed, with an inner ring (14) made in one piece having an axially measured height H, having an outer annular face (26) facing radially outwards whereon a raceway (20) is formed, and rolling bodies (16) inserted between the raceway (18) of the outer ring (12) and the raceway (20) of the inner ring (14), with the inner ring (14) having an inner annular face (30) facing radially inwards, having an annular recess (32) extending axially on either side of the raceway (20) of the inner ring (14) and with the height E of the outer ring (12) being less than the height H of the inner ring, **characterized in that** the shaft is hollow and the inner ring additionally has two shrinking seats (34) located axially on either side of the annular recess (32) and shrunk onto the hollow shaft.

2. An assembly according to claim 1, **characterized in that** the rolling bodies have a rolling diameter $\phi$, with the height E being such that $E<3\phi/2$, and preferably $E<4\phi/3$.

3. An assembly according to any one of the preceding claims, **characterized in that** the outer face (26) of the inner ring (14) comprises at least a first cylindrical reference seat (28) axially projecting relative to the outer ring (12), with the first reference seat (28) being preferably ground.

4. An assembly according to the preceding claim, **characterized in that** the outer face (26) of the inner ring (14) has a second cylindrical reference seat (28) axially projecting relative to the outer ring (12), with the second reference seat (28) being preferably ground, with the raceway (20) of the inner ring (14) being located between the first reference seat (28) and the second reference seat (28).

5. An assembly according to the preceding claim, **characterized in that** the first reference seat (28) and the second reference seat (28) have axially measured heights, which are different from each other.

6. An assembly according to any one of the preceding claims, **characterized in that** it further comprises an annular protective cover (46) wherein the outer ring (12) is entirely accommodated, with the annular protective cover (46) radially resting against the outer face (26) of the inner ring (14) axially on either side of the raceway (20) of the inner ring (14).

7. An assembly according to any one of claims 1 to 5, **characterized in that** the outer face (26) of the inner ring (14) has two sealing annular grooves (48) axially located on either side of the raceway (20) of the inner ring (14) and axially on either side of the outer ring (12).

8. An assembly according to claim 7, **characterized in that** it further comprises an annular protective cover (46) wherein the outer ring (12) is entirely accommodated, with the annular protective cover (46) having a U-shaped profile, with branches being received in the two sealing annular grooves (48) axially on either side of the raceway (20) of the inner ring (14).

9. An assembly according to any one of the preceding claims, **characterized in that** the raceway (20) of the inner ring (14) has an axially measured width L, such that $L<H/2$, preferably $L<H/3$.

10. An assembly according to the preceding claim, **characterized in that** the annular recess (32) has an axially measured width D, such that $D>L$, and preferably $D>3/2L$, and preferably $D>2L$.

11. An assembly according to any one of the preceding claims, **characterized in that** a fillet, a chamfer or a shoulder (38) is formed between each shrinking seat (34) and the annular recess (32).

12. An assembly according to any one of the preceding claims, **characterized in that** the inner ring (14) has two flat annular end faces (24), with each one being connected to one of the shrinking seats (34) by a chamfer (36) having an angle greater than 45°, preferably greater than 60° or rounded.

13. An assembly according to any one of the preceding claims, **characterized in that** no contact exists between the annular recess (32) and the hollow shaft (40) in an annular region extending axially on either side of a median radial plane (P) of the raceway (20) formed on the inner ring (14).

14. An assembly according to any one of the preceding claims, **characterized in that** no contact exists between the annular recess (32) and the hollow shaft (40) in a portion of space delimited by two radial planes (P1, P2) surrounding the raceway (20) formed on the inner ring (14).

15. An assembly according to any one of the preceding claims, **characterized in that** it further comprises at least one machine member, in particular a cam, a gear or a toothed wheel, shrunk onto the hollow shaft.

16. An assembly according to claim 15, **characterized in that** the machine member is unfinished.

17. A method for manufacturing an assembly according to claim 15 or claim 16, **characterized in that** at least one machine member and at least one rolling bearing (10) are slipped onto an undeformed hollow shaft (40), with the rolling bearing (10) defining an axis of rotation (100) and having an outer ring (12) having an axially measured height E and whereon a raceway (18) facing radially inwards is formed, with an inner ring (14) made in one piece having an axially measured height H, having an outer annular face (26) facing radially outwards whereon a raceway (20) is formed, and rolling bodies (16) inserted between the raceway (18) of the outer ring (12) and the raceway (20) of the inner ring (14), with the inner ring (14) having an inner annular face (30) facing radially inwards having an annular recess (32) and two shrinking seats (34) located axially on either side of the annular recess (32), with the annular recess (32) extending axially on either side of the raceway (20) of the inner ring (14) and the height E of the outer ring (12) being less than the height H of the inner ring (14), then a plastic deformation of the shaft (40) radially outwards is caused so as to make the inner ring (14) of the rolling bearing (10) and the machine member integral with the shaft (40).

18. A manufacturing method according to claim 17, **characterized in that**, further to making the inner ring (14) of the rolling bearing (10) integral with the shaft (40), the machine member is machined by rotating the shaft, and guiding such rotation of the shaft through a sliding or rolling contact between a guiding block or steadyrest (44) and at least one reference seat (28) of the outer annular face (26) of the inner ring (14) of the rolling bearing (10).

19. A manufacturing method according to claim 18, **characterized in that** the machining comprises the grinding of the machine member.

20. A manufacturing method according to claim 18 or claim 19, **characterized in that** during the machining the machine member, the rolling bearing (10) is associated with a cover (46) to form an assembly according to claim 6 or claim 8.

21. A manufacturing method according to any one of claims 17 to 20, **characterized in that** the machine member is a cam.

# Fig.1

# Fig.2

# Fig.3

EP 2 913 549 B1

Fig.4

Fig.5

13

# Fig.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2593228
- US 6129456 A
- US 4875270 A
- FR 1450958